# FASCICULE DE BREVET EUROPEEN

(11) **EP 3 131 734 B1**
(45) Date de publication et mention de la délivrance du brevet: **14.03.2018**
(21) Numéro de dépôt: 15713519.5
(22) Date de dépôt: 02.04.2015
(51) Int. Cl.: B29C 49/12, B29C 49/48, B29C 49/06, B29C 49/36, B29C 49/70, B29C 49/30, B29K 67/00, B29K 101/12, B29K 105/00, B29L 31/00

(54) **UNITÉ DE MOULAGE COMPORTANT DES MOYENS D'ACTIONNEMENT D'UN FOND DE MOULE PORTÉS PAR UN SUPPORT FIXE**
GIESSEINHEIT MIT FORMBODENBETÄTIGUNGSEINRICHTUNG AUF EINER FIXEN HALTERUNG
MOULDING UNIT COMPRISING MOULD BOTTOM ACTUATION MEANS SUPPORTED BY A FIXED HOLDER

(30) Priorité: 16.04.2014 FR 1453396
(43) Date de publication de la demande: 22.02.2017
(73) Titulaire: Sidel Participations, 76930 Octeville-sur-Mer (FR)
(72) Inventeur: CIRETTE, Damien, 76930 Octeville-sur-Mer (FR); ROCHE, Yves, 76930 Octeville-sur-Mer (FR)
(74) Mandataire: Grassin d'Alphonse, Emmanuel Jean Marie
(86) Numéro de dépôt international: PCT/EP2015/057374
(87) Numéro de publication internationale: WO 2015/158559

(56) Documents cités:
- FR-A1- 2 945 469
- JP-A- 2008 254 244
- US-A- 5 785 921
- US-A1- 2008 063 742
- US-A1- 2013 224 325

## Description

### DOMAINE TECHNIQUE DE L'INVENTION

L'invention concerne une unité de moulage pour le formage d'un récipient en matériau thermoplastique par soufflage, notamment par étirage-soufflage, d'une préforme, l'unité de moulage comportant un fond de moule mobile sur une course de boxage.

### ARRIERE PLAN TECHNIQUE DE L'INVENTION

L'invention concerne plus particulièrement une unité de moulage pour le formage d'un récipient en matériau thermoplastique par soufflage, notamment par étirage-soufflage, d'une préforme, l'unité de moulage comportant :
- deux demi-moules qui sont mobiles transversalement par rapport à un support fixe entre une position jointe de moulage et une position écartée d'extraction du récipient fini ;
- un fond de moule qui est mobile verticalement entre une position inférieure d'extraction du récipient fini et une position supérieure de moulage d'une embase du récipient, le fond de moule étant susceptible d'être déplacé entre les deux demi-moules en position jointe de moulage sur une course orientée, dite de boxage, s'étendant depuis une position intermédiaire initiale de boxage jusqu'à sa position supérieure de moulage ;
- un chariot qui porte le fond de moule et qui est monté mobile dans le support fixe ;
- des premiers moyens d'actionnement pour déplacer le chariot par rapport à son support fixe entre une position inférieure du fond de moule et sa position intermédiaire initiale de boxage ;
- des deuxièmes moyens d'actionnement comportant au moins un cylindre logeant un piston coulissant verticalement susceptible de pousser le fond de moule sur sa course de boxage par mise sous pression d'une chambre inférieur de travail du cylindre.

On connaît dans l'état de la technique de telles unités de moulage comportant un dispositif pour réaliser une opération dite "de boxage" de l'embase d'un récipient, telle qu'en particulier une bouteille en matière thermoplastique.

Une telle opération de boxage est par exemple décrite dans le document FR-2.508.004 auquel on se reportera, de manière non limitative, pour de plus amples détails sur cette technique de formage.

L'opération de boxage correspond à une technique de formage utilisée lors de la fabrication de récipients pour lesquels des caractéristiques particulières sont recherchées, notamment en matière de rigidité structurelle de leur embase, par exemple pour certaines bouteilles plastiques fabriquées en PET (Polyéthylène Téréphtalate).

Cette technique de formage est notamment, mais non exclusivement, utilisée aux fins de fabrication de récipients comme de telles bouteilles qui sont destinées à être remplies "à chaud", c'est à dire remplies par un liquide à conditionner dont la température est par exemple comprise entre 60°C et 95°C. Elle permet d'obtenir une embase souple formant une membrane qui se déforme sous l'effet de la dépression créée par le refroidissement du liquide chaud contenu dans le récipient fermé.

Cette technique est encore susceptible d'être utilisée pour réduire la quantité de matière présente dans l'embase du récipient dont on recherche à alléger le poids afin d'en réduire le coût et/ou encore pour des raisons esthétiques.

La technique du boxage consiste à déplacer, au cours du formage, la partie du moule destinée au moulage de l'embase du récipient, appelée "fond de moule" dans la suite de la description, ou encore "moule du fond" dans le document référencé précédemment. Ce déplacement est réalisé pendant que la matière constitutive de la préforme ou du récipient (formé ou en formation) possède encore une température appropriée de déformation. Ce déplacement permet au fond de moule d'étirer la matière constituant l'embase du récipient. Le fond de moule surgit ainsi tel un poing pour "boxer" l'embase du récipient en cours de formage, d'où le nom de l'opération de boxage.

Dans les installations de moulage connues ne mettant pas en oeuvre d'opération de boxage, il est déjà connu de déplacer le fond de moule entre sa position inférieure d'extraction du récipient et sa position de moulage au moyen d'un dispositif d'actionnement à came. Un tel dispositif permet notamment d'obtenir une commande rapide et précise des déplacements du fond de moule. Une telle rapidité d'actionnement n'est pas possible avec un vérin pneumatique. Néanmoins, les dispositifs d'actionnement à came ne permettent pas d'obtenir une force suffisante pour réaliser une opération de boxage.

Pour résoudre ce problème, on a proposé de commander les déplacements du fond de moule au moyen d'un premier dispositif d'actionnement à came permettant une mise en position rapide et précise du fond de moule, et au moyen d'un deuxième dispositif d'actionnement pneumatique permettant de déplacer le fond de moule sur sa course de boxage avec une force suffisante pour réaliser l'opération de boxage.

Les figures 5 à 8 du document FR-2.508.004 représentent les principales étapes de cette technique et illustrent un exemple d'une opération de boxage mise en oeuvre lors du formage d'une bouteille en matière thermoplastique.

Par comparaison avec un moule conventionnel comportant deux demi-moules et un fond de moule séparé, le fond de moule n'est pas immobilisé axialement par les demi-moules joints mais il est apte à être déplacé axialement par des moyens d'actionnement entre une position intermédiaire initiale de boxage (position basse) et une position supérieure finale de moulage (position haute).

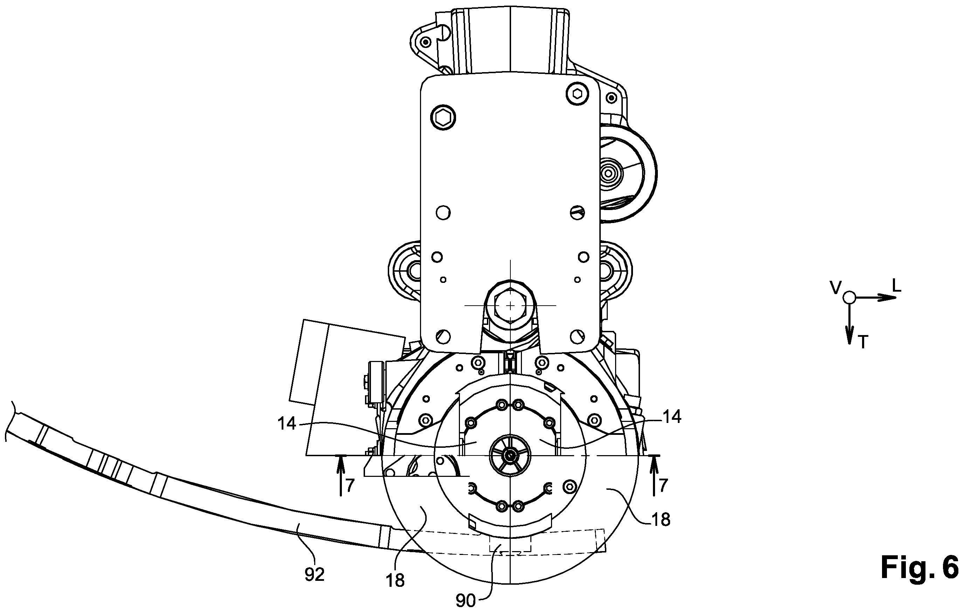

Sur la figure 5 illustrant une première étape, le fond de moule est déplacé vers les demi-moules pour occuper la position initiale dans laquelle il est positionné axialement en retrait de manière que la dimension axiale (hauteur) de la cavité de moulage soit supérieure à celle du corps du récipient définitif.

Une préforme, introduite dans le moule, s'étend axialement à travers une ouverture débouchant dans une cavité de moulage que délimite les deux demi-moules associés au fond de moule, lesdits demi-moules montés mobiles entre une position écartée et une position jointe (représentée sur la figure 5).

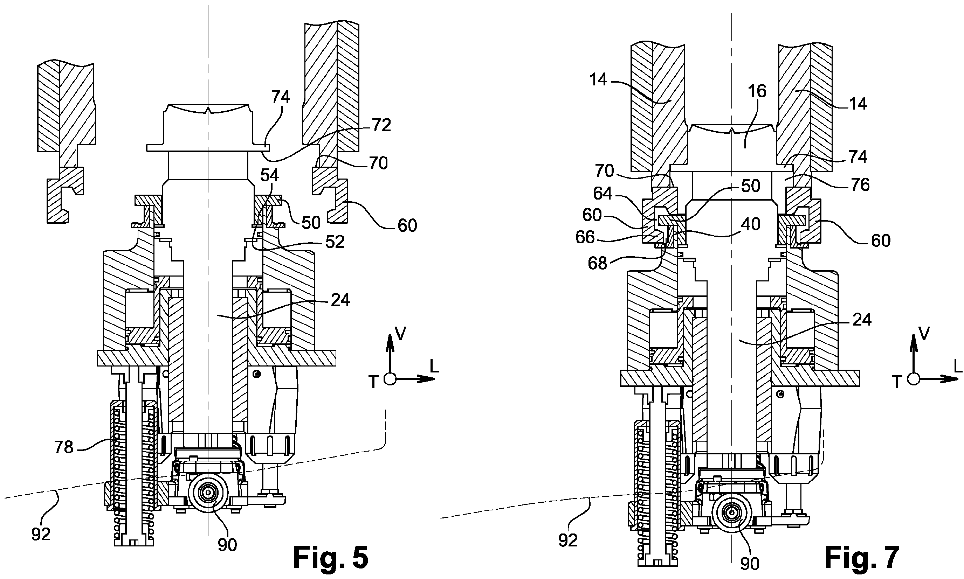

Sur la figure 6 illustrant une deuxième étape, la préforme est étirée axialement par une tige d'étirage jusqu'à atteindre sensiblement la partie sommitale du fond de moule.

Le fond de moule occupe alors encore sa position intermédiaire initiale de boxage, l'étirage axial de la préforme s'effectue suivant une course maximale d'étirage qui est supérieure à la hauteur du récipient (bouteille), soit avec une surcourse correspondant à la différence entre la position intermédiaire initiale de boxage et la position finale de moulage du fond de moule. Dans cette position finale de moulage, la dimension axiale de la cavité de moulage correspond à celle du récipient définitif.

Une telle opération d'étirage est effectuée en combinaison avec une opération de soufflage, de préférence respectivement précédées par un pré-soufflage, de manière à obtenir un étirage bi-axial, c'est-à-dire une orientation moléculaire bi-axiale de la matière grâce à laquelle la rigidité structurelle de l'embase du récipient notamment est améliorée.

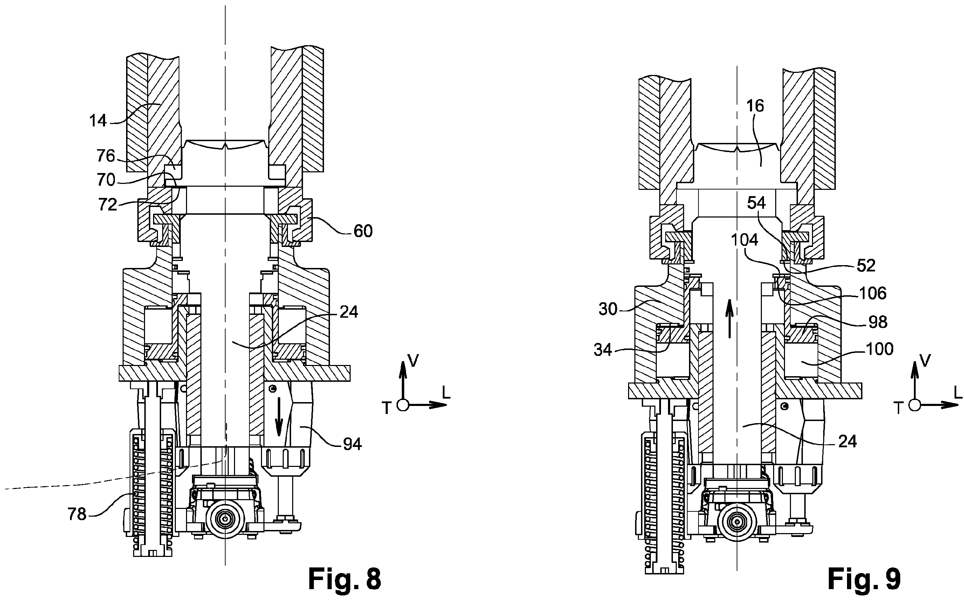

A l'issue de cette deuxième étape, l'embase du récipient n'est ici pas encore formée et la matière a encore une température de déformation. Le fond de moule est alors déplacé axialement vers le haut par des moyens d'actionnement associés, depuis la position initiale jusqu'à la position finale de moulage illustrée à la figure 8.

Le fond de moule parcourt une course axiale de boxage au cours de laquelle ledit fond de moule va étirer la matière en repoussant axialement l'embase en direction de l'intérieur du récipient.

Toutefois, selon l'application, les techniques varient et l'opération de boxage est susceptible d'être effectuée pendant ou après la formation du récipient qui est au final mis en forme par une opération de soufflage à une pression de soufflage.

La pression finale de soufflage est susceptible d'atteindre des valeurs de l'ordre de 20 à 40 bars selon les applications, soit par conséquent des valeurs communément considérées comme des hautes pressions.

A l'exception de l'opération de boxage, le formage du récipient est par conséquent réalisé de manière conventionnelle par l'étirage-soufflage d'une préforme en matière thermoplastique préalablement conditionnée thermiquement à cet effet, avec une ou plusieurs étapes de soufflage consistant en l'injection à l'intérieur de la préforme d'un fluide sous pression, généralement de l'air.

Bien entendu, la description qui vient d'être faite n'est nullement limitative et diverses variantes ou perfectionnements sont susceptibles d'y être apportés pour réaliser l'opération de boxage.

Pour réaliser une telle opération de boxage de l'embase du récipient au cours de son formage, un dispositif du type décrit précédemment équipe chaque unité de moulage de récipients de la machine.

Une telle unité de moulage comporte des moyens d'actionnement qui sont destinés à déplacer sélectivement le fond de moule entre lesdites positions intermédiaire initiale de boxage et finale de moulage.

Le document FR-2.945.469 décrit un exemple de moyens d'actionnement d'une telle unité de moulage apte à réaliser une opération de boxage.

Selon ce document les moyens d'actionnement du fond de moule sont constitués par un simple vérin fonctionnant au moyen d'un fluide sous pression formé par de l'air comprimé. Le vérin pneumatique est porté par un chariot qui permet de déplacer le fond de moule depuis une position inférieure d'extraction jusqu'à sa position intermédiaire initiale de boxage. Le vérin est ensuite actionné pour déplacer le fond de moule sur sa course de boxage.

Le dispositif pour réaliser le boxage selon ce document et en particulier les moyens d'actionnement formés par un tel vérin ne donnent cependant pas entière satisfaction.

En effet, un tel dispositif est particulièrement lourd et il ne permet pas de fabriquer les récipients en série avec une cadence aussi soutenue que pour des récipients fabriqués sans opération de boxage. Cette baisse de cadence est notamment due au poids important du chariot ainsi réalisé.

Le but de l'invention est donc de résoudre notamment les inconvénients précités et encore de proposer une nouvelle conception de dispositif pour réaliser l'opération de boxage qui soit avantageusement simple, fiable, économique et surtout rapide.

### BREF RESUME DE L'INVENTION

L'invention propose une unité de moulage du type décrit précédemment, caractérisée en ce que le fond de moule est porté de manière fixe par le chariot, le cylindre étant fixe par rapport au support fixe.

Selon d'autres caractéristiques de l'invention :
- le support fixe comporte une face de butée supérieure qui limite le déplacement du chariot vers le haut dans la position supérieure du fond de moule ;
- la face de butée supérieure est portée par un premier élément amovible qui est fixé de manière démontable sur le support fixe ;
- au moins l'un des demi-moules comporte une face de butée inférieure qui limite le déplacement du chariot vers le bas dans sa position intermédiaire initiale de boxage lorsque les demi-moules occupent leur position jointe de moulage ;
- la face de butée inférieure est portée par un deuxième élément amovible qui est fixé de manière démontable sous le demi-moule associé ;
- le fond de moule comporte une face d'arrêt qui est destinée à venir en contact avec la face de butée inférieure ;
- les premiers moyens d'actionnement comporte des moyens de rappel élastique qui exercent un effort de rappel élastique du chariot vers sa position supérieure de moulage ;
- les premiers moyens d'actionnement comportent un suiveur de came qui est porté par le chariot et un chemin de came qui coopère avec le suiveur de came pour faire coulisser le chariot jusqu'à sa position inférieure à l'encontre de l'effort de rappel élastique ;
- les premiers moyens d'actionnement comportent un dispositif d'armement susceptible d'exercer un effort d'armement sur le chariot pour le déplacer depuis sa position supérieur jusqu'à sa position intermédiaire initiale de boxage à l'encontre de l'effort de rappel élastique sur une course orientée d'armement inversée par rapport à la course de boxage ;
- les premiers moyens d'actionnement comportent un vérin qui est porté par le support fixe ;
- l'effort d'armement susceptible d'être exercé par le vérin est très inférieur à l'effort de boxage susceptible d'être exercé par le piston sur le chariot ;
- le piston coulisse librement par rapport au chariot, le chariot étant susceptible de coulisser entre sa position inférieure et sa position supérieure tandis que le piston demeure fixe.

L'invention concerne aussi un procédé de formage d'un récipient par soufflage d'une préforme mettant en oeuvre l'unité de moulage réalisée selon les enseignements de l'invention, caractérisé en ce qu'il comporte chronologiquement :
- une première étape mise en place, le fond de moule occupant initialement sa position inférieure et les demi-moules occupant initialement leur position écartée, au cours de laquelle le fond de moule est déplacé jusqu'à sa position supérieure, puis au cours de laquelle les deux demi-moules sont déplacés jusqu'à leur position jointe de moulage ;
- puis une deuxième étape d'armement au cours de laquelle le chariot est déplacé le long de sa course d'armement jusqu'à sa position intermédiaire initiale de boxage ;
- puis une troisième étape de boxage qui intervient pendant le formage d'une préforme insérée dans le moule après la première étape, et durant laquelle le chariot est déplacé le long de sa course de boxage au moyen du piston de manière à étirer la matière de la préforme en cours de formage pour former l'embase du récipient ;
- puis une quatrième étape d'extraction du récipient fini au cours de laquelle le chariot est déplacé depuis sa position supérieure jusqu'à sa position inférieure après ouverture des deux demi-moules dans leur position écartée.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente une unité de moulage réalisée selon les enseignements de l'invention dans laquelle les demi-moules occupent leur position jointe de moulage, et dans laquelle le fond de moule occupe sa position supérieure de moulage ;
- la figure 2 est une vue en section selon le plan de coupe 2-2 de la figure 4 et dans laquelle les demi-moules occupent leur position écartée tandis que le fond de moule occupe sa position inférieure d'extraction ;
- la figure 3 est une vue en perspective éclatée qui représente un demi-moule, un mors associé au demi-moule et un support de moule associé ;
- la figure 4 est une vue de dessus de l'unité de moulage de la figure 1 dans laquelle l'unité de moulage est dans un état correspondant à l'état représenté à la figure 2 ;
- la figure 5 est une vue en section similaire à celle de la figure 2 qui représente les demi-moules en position écartée et le fond de moule dans sa position supérieure de moulage ;
- la figure 6 est une vue de dessus similaire à celle de la figure 4 dans laquelle les demi-moules occupent leur position jointe ;
- la figure 7 est une vue similaire à celle de la figure 2 dans laquelle les demi-moules occupent leur position jointe, tandis que le fond de moule occupe sa position supérieure de moulage ;
- la figure 8 est une vue similaire à celle de la figure 2 dans laquelle les demi-moules occupent leur position jointe, tandis que le fond de moule occupe sa position intermédiaire initiale de boxage ;
- la figure 9 est une vue similaire à celle de la figure 2 dans laquelle les demi-moules occupent leur position jointe, tandis que le fond de moule occupe sa position supérieure de moulage dans laquelle il est maintenu par le piston ;
- la figure 10 est une vue similaire à celle de la figure 2 dans laquelle les demi-moules occupent leur position jointe, tandis que le fond de moule occupe sa position supérieure de moulage, le piston étant de nouveau au repos ;
- la figure 11 est une vue similaire à celle de la figure 2 qui représente l'unité de moulage dans une configuration de moulage sans opération de boxage, dans laquelle les demi-moules occupent leur position jointe, tandis que le fond de moule occupe sa position supérieure de moulage dans laquelle il est maintenu par emboîtement avec les demi-moules.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale dirigée d'arrière en avant, verticale dirigée de bas en haut, et transversale dirigée de gauche à droite qui sont indiquées par le trièdre "L,V,T" des figures. Ces orientations sont liées au support fixe de l'unité de moulage, la direction longitudinale étant tangente à la trajectoire de l'unité de moulage lors de la rotation du carrousel.

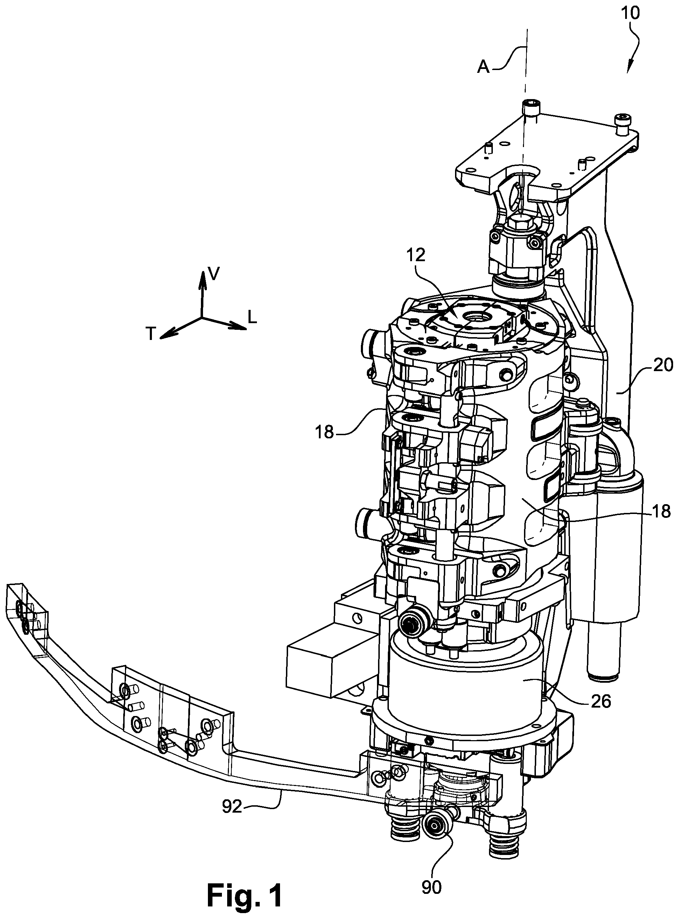

On a représenté à la figure 1 une unité 10 de moulage pour le formage en série de récipients en matériau thermoplastique par soufflage, notamment par étirage-soufflage, d'une préforme préalablement réchauffée. Le récipient final est par exemple formé par une bouteille.

Une telle unité 10 de moulage fait partie d'une machine de soufflage qui comporte généralement plusieurs unités de moulage identiques réparties en périphérie d'un carrousel (non représenté). L'unité 10 de moulage est ainsi susceptible d'être déplacée le long d'une trajectoire circulaire par rapport au sol sur lequel est posé la machine de soufflage.

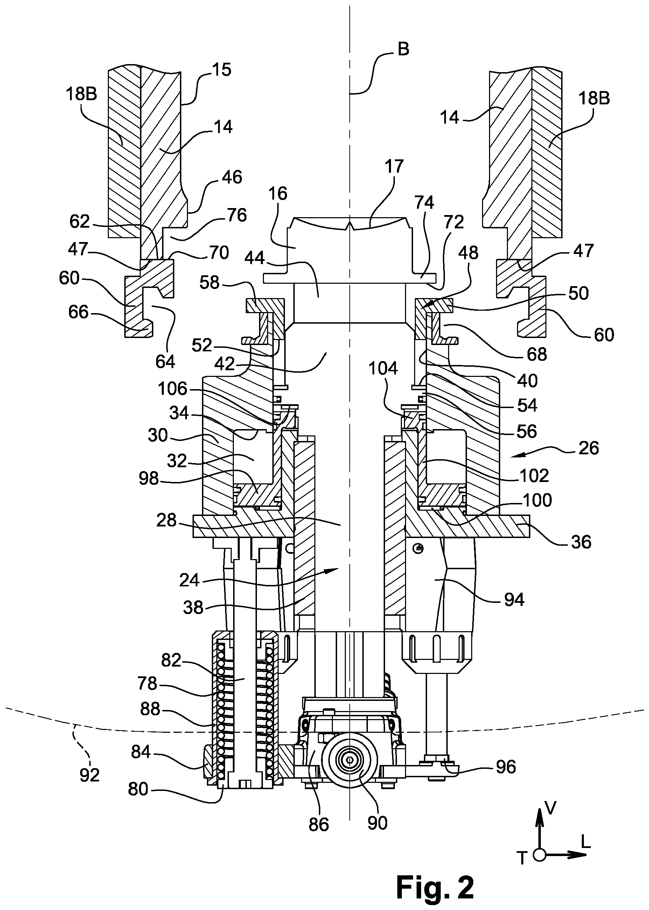

L'unité 10 de moulage comporte un moule 12 de soufflage. Comme représenté plus en détails à la figure 2, le moule 12 de soufflage comporte, de manière connue :
- deux demi-moules 14, parfois appelés "coquilles", qui portent une empreinte 15 d'un corps du récipient d'axe vertical "B" à obtenir ; et
- un fond 16 de moule qui porte une empreinte 17 de l'embase, ou cul, dudit récipient.

Le fond 16 de moule et les demi-moules 14 sont susceptibles d'être changés en fonction de la forme du récipient final à obtenir.

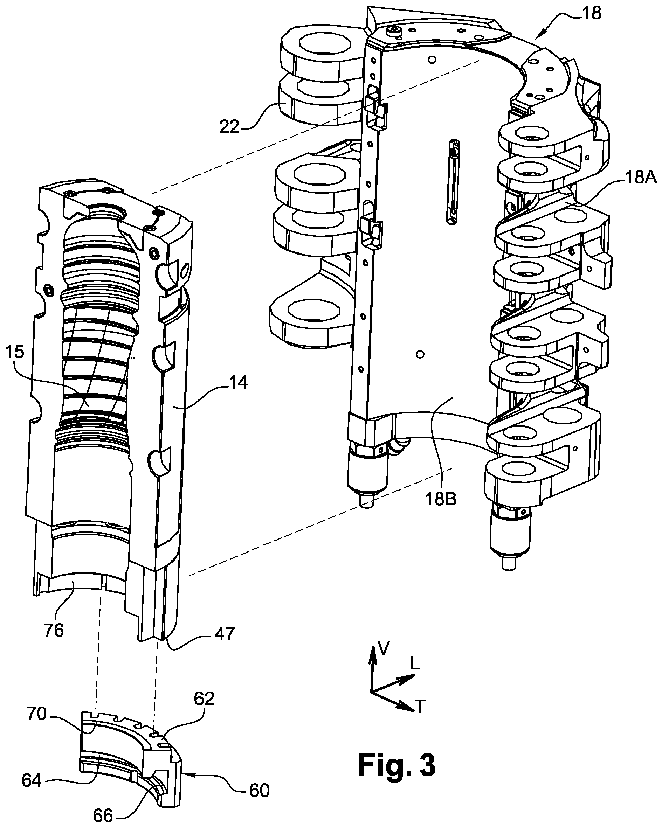

Les demi-moules 14 sont généralement fixés de manière amovible dans des supports 18 de moule, ou porte-moule, représenté par exemple à la figure 3. Chaque support 18 de moule est porté par un bâti 20, ou console, représenté à la figure 1. Le bâti 20 est destiné à être porté par le carrousel.

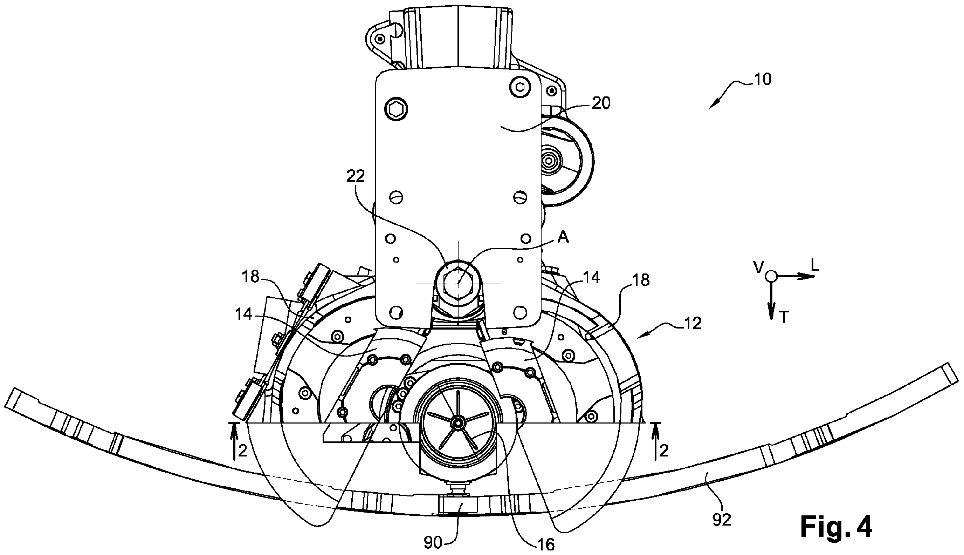

Les supports 18 de moule sont montés pivotant sur le bâti 20 par l'intermédiaire d'une charnière 22 latérale commune d'axe "A" vertical, comme représenté à la figure 4. Les deux demi-moules 14 sont ainsi mobiles longitudinalement entre une position écartée d'extraction du récipient fini, telle que représentée aux figures 2, 4 et 5, et une position jointe de moulage du récipient, telle que représentée aux figures 6 à 10.

De manière connue, et comme représenté à la figure 3, chaque support 18 de moule est formé par une équerre 18A qui comporte la charnière 22 et par un porte-moule 18B, aussi appelé porte-coquille, qui est monté sur ladite équerre 18A. Le porte-moule 18B est destiné à recevoir le demi-moule 14 associé. Le porte-moule 18B comporte généralement un circuit de fluide caloporteur qui permet de réguler la température du demi-moule 14. En outre, le porte-moule 18B est monté sur l'équerre 18A avec un jeu longitudinal qui permet d'assurer que les deux demi-moules 14 sont effectivement joints lors du moulage grâce des moyens de compensation bien connus qui ne seront pas décrits plus en détails par la suite. Le demi-moule 14 est fixé de manière rigide, mais démontable, dans le porte-moule 18B associé.

En variante, le demi-moule 14 comporte aussi un circuit fluidique.

Aux figures 2 et 5 à 11, seul le porte-moule 18B a été représenté pour des raisons de clarté.

En se reportant à la figure 2, le fond 16 de moule est porté de manière fixe par un chariot 24 qui est monté mobile verticalement dans un support 26 fixe par rapport au bâti 20 de l'unité 10 de moulage. Le chariot 24 et le fond 16 de moule forment ainsi un ensemble monobloc. Le chariot 24 présente une portion 28 centrale cylindrique d'axe vertical coaxial à l'axe "B" de l'empreinte 15.

Le support 26 fixe comporte une cloche 30 d'extrémité supérieure qui délimite radialement un logement cylindrique, dit par la suite "cylindre 32", d'axe "B" coaxial à l'empreinte 15. Le cylindre 32 est délimité vers le haut par une paroi 34 supérieure de la cloche 30 et il est fermé vers le bas par un couvercle 36 horizontal inférieur.

Le couvercle 36 est traversé en son centre par un palier 38 fixe de guidage en coulissement vertical qui reçoit la portion 28 centrale du chariot 24. Le palier 38 traverse ainsi le cylindre 32. La cloche 30 est aussi traversée verticalement en son centre par une cheminée 40 de passage du chariot 24 qui débouche axialement sous la cavité des demi-moules 14 en position fermée

Pour permettre le changement du fond 16 de moule, l'extrémité supérieure du chariot 24 comporte une sellette 42 qui est destinée à permettre la fixation rapide du fond 16 de moule sur le chariot 24. La sellette 42 est agencée à une extrémité supérieure de la portion 28 centrale. La sellette 42 est logée dans la cheminée 40 d'extrémité supérieure de la cloche du support 26 fixe.

Comme cela sera expliqué plus en détails par la suite, le chariot 24 est ainsi susceptible de coulisser verticalement entre :
- une position extrême inférieure d'extraction d'un récipient fini, comme représenté à la figure 2, dans laquelle le fond 16 de moule est positionné au-dessous de l'empreinte 15 des demi-moules 14 ; et
- une position extrême supérieure de moulage de l'embase du récipient, comme représentée aux figures 5, 7, 9 et 10, dans laquelle le fond 16 de moule est positionné entre les demi-moules 14 de manière à compléter l'empreinte 15 du récipient final.

Dans le mode de réalisation représenté aux figures, une entretoise 44 est intercalée entre le fond 16 de moule et la sellette 30 pour permettre d'ajuster verticalement la position du fond 16 de moule par rapport aux deux demi-moules 14. Selon la hauteur du récipient final, il est possible de changer d'entretoise, voire de supprimer l'entretoise.

En outre, l'unité 24 de moulage est apte à réaliser une opération de boxage. A cet effet, le fond 16 de moule doit pouvoir coulisser verticalement entre les deux demi-moules 14 occupant leur position fermée de moulage. A cet effet, les demi-moules 14 présentent, en position fermée, un orifice 46 cylindrique vertical qui débouche vers le bas dans une face inférieure 47 des demi-moules 14 au droit de la cheminée 40 du support 26 fixe et vers le haut dans la cavité délimitée par l'empreinte 15 du corps du récipient.

Pour limiter le déplacement du chariot 24 vers le haut dans sa position extrême supérieure, une bague 48 de butée amovible est fixée de manière démontable à une extrémité supérieure de la cheminée 40 du support 26 fixe.

La bague 48 de butée présente une forme tubulaire. Une collerette 50 s'étend radialement vers l'extérieur depuis un bord d'extrémité supérieur de la bague 48 de butée. La portion tubulaire de la bague 48 de butée est reçue dans la cheminée 40 de manière à être interposée radialement entre la sellette 42 et la face cylindrique interne de la cheminée 40. Le bord circulaire d'extrémité inférieur de la bague 48 de butée forme une face 52 de butée supérieure qui limite le déplacement du chariot 24 vers le haut dans la position supérieure du fond 16 de moule.

A cet effet, le chariot comporte une première face 54 d'arrêt qui est orientée verticalement vers le haut, en vis-à-vis de la face 52 de butée. La première face 54 d'arrêt est portée par un premier collet 56 qui s'étend radialement vers l'extérieur depuis une face cylindrique périphérique de la sellette 42.

La collerette 50 de la bague 48 de butée est posée sur un bord 58 horizontal d'extrémité supérieur de la cheminée 40. Le pourtour de la collerette 42 affleure radialement avec le pourtour du bord 58 supérieur de la cheminée 40.

La bague 48 de butée est fixée à la cloche 30 du support 26 fixe par l'intermédiaire de vis (non représentées) traversant la collerette 50. Il est ainsi possible de démonter facilement la collerette 50 lorsqu'aucune opération de boxage n'est requise, comme cela sera expliqué plus en détails par la suite. Ainsi, la face 52 de butée supérieure est portée par un premier élément amovible, ici la bague 48 de butée, qui est fixé de manière démontable sur le support 26 fixe, ici par l'intermédiaire de vis.

Lors d'une opération d'étirage-soufflage, il est connu d'immobiliser les demi-moules 14 en position fermée par rapport au fond 16 de moule. Ceci permet d'obtenir un moulage précis de l'empreinte en évitant de faire apparaitre des bourrelets de matière sur le récipient final au niveau des plans de joint.

Dans l'unité 10 de moulage réalisée selon les enseignements de l'invention, le chariot 24 doit pouvoir coulisser verticalement par rapport aux demi-moules 14 en position fermée. Pour permettre un positionnement précis du fond 16 de moule par rapport aux demi-moules 24, deux dispositifs sont mis en oeuvre.

Tout d'abord, les demi-moules 14 sont fermés sur le support 26 fixe. L'ensemble est verrouillé par emboîtement d'éléments de formes complémentaires entre les demi-moules 14 et le support 26 fixe.

Comme représenté notamment aux figures 2 et 3, chaque demi-moules 14 est équipé d'un mors 60 de verrouillage associé. Chaque mors 60 présente une forme de secteur annulaire qui épouse la forme de la face 47 inférieure du demi-moule 14 associé. Une face 62 supérieure du mors 60 est appliquée contre la face 47 inférieure du demi-moule 14, puis le mors 60 est fixé de manière démontable directement sur le demi-moule 14, par exemple au moyen de vis.

En variante non représentée de l'invention, étant donné que le demi-moule 14 est fixé de manière rigide dans son porte-moule, les mors 60 sont fixés sous la face inférieure des porte-moules. Etant donné que le demi-moule 14 est fixe par rapport au porte-moule associé, chaque mors est fixé sous le demi-moule associé par l'intermédiaire du porte-moule. Dans ce cas, les mors 60 sont fixés à demeure sur l'unité de moulage, et il n'est pas nécessaire de les démonter pour chaque changement de moule.

Chaque mors 60 présente sur sa face concave, dirigée radialement vers l'axe "B" de l'empreinte 15, une gorge 64 ouverte en vis-à-vis de la collerette 50 de la bague 48 de butée, comme cela est représenté à la figure 2. La gorge 64 est délimitée inférieurement par un rebord 66 qui fait saillie radialement vers l'intérieur.

Lorsque les demi-moules 14 sont commandés dans leur position jointe de moulage, comme cela est illustré à la figure 7, les mors 60 enserrent un tronçon d'extrémité supérieure de la cheminée 40. La cheminée 40 présente sur sa face extérieure une gorge 68 qui reçoit le rebord 66 des mors 60. La collerette 50 de la bague 48 de butée et un rebord de la cheminée 40 sont aussi reçus dans la gorge 64 des mors 60. Ces premiers moyens de verrouillage permettent d'immobiliser verticalement les demi-moules 14 en position fermée par rapport au support 26 fixe, sachant que le chariot 24 est lui-même guidé précisément en coulissement dans le support 26 fixe.

Les premiers moyens de verrouillage permettent de maintenir les demi-moules 14 en position par rapport au support 26 fixe durant l'opération de soufflage et durant l'opération de boxage au cours desquelles la pression de fluide de soufflage applique des forces extrêmement intenses sur les demi-moules 14 et sur le fond 16 de moule.

Pour mettre en oeuvre l'opération de boxage, le fond 16 de moule est susceptible d'être déplacé entre les deux demi-moules 14 en position jointe de moulage sur une course orientée, dite de boxage, s'étendant depuis une position intermédiaire initiale de boxage bien définie jusqu'à sa position supérieure de moulage. Ladite position intermédiaire forme une position initiale de boxage dans laquelle le fond 16 de moule est agencé au-dessus de sa position inférieure d'extraction.

La position intermédiaire initiale de boxage doit être définie précisément afin que la longueur de la course de boxage soit adaptée à la forme du récipient à former. A cet effet, le chariot 24 est arrêté dans sa position intermédiaire initiale de boxage par contact avec une face 70 de butée inférieure. Au moins l'un des demi-moules 14 comporte la face 70 de butée inférieure qui limite le déplacement du chariot 24 vers le bas dans sa position intermédiaire initiale de boxage lorsque les demi-moules 14 occupent leur position jointe de moulage, comme illustré à la figure 8.

Pour que la course de boxage soit adaptée aux différentes formes de récipient final, la face 70 de butée inférieure est portée par un deuxième élément amovible qui est fixée de manière démontable sous le demi-moule 14 associé. Dans le mode de réalisation représenté aux figures, la face 70 de butée inférieure est ici formée par une portion de la face supérieure des mors 60.

En variante, la face de butée inférieure est située au-dessous de la face supérieure des mors. Les mors comportent alors un lamage dans leur face supérieure. Ceci permet de faire varier la position intermédiaire initiale de boxage du chariot en fonction de la forme du récipient final et en fonction de la longueur de la course de boxage.

Le fond 16 de moule comporte une face 72 d'arrêt qui est destinée à venir en contact avec la face 70 de butée inférieure. Cette face 72 d'arrêt forme une face inférieure d'un deuxième collet 74 qui s'étend radialement en saillie depuis le fond 16 de moule. Ce collet 74 est reçu dans un lamage 76 réalisé dans la face 47 inférieure des demi-moules 14, autour de l'orifice 46 de passage du fond 16 de moule. Ce lamage 76 permet de libérer la portion de la face 62 supérieur des mors 60 formant la face 70 de butée inférieure.

Les déplacements du chariot 24 sont commandés par deux moyens d'actionnement distincts. Chaque moyen d'actionnement permet de réaliser une étape spécifique du procédé de boxage.

Des premiers moyens d'actionnement permettent déplacer le chariot 24 par rapport à son support 26 fixe entre la position inférieure du fond 16 de moule et sa position intermédiaire initiale de boxage.

Les premiers moyens d'actionnement comportent des moyens 78 de rappel élastique qui exercent un effort de rappel élastique du chariot 24 vers sa position supérieure de moulage. Les moyens 78 de rappel élastique sont formés par un ressort.

Une coupelle 80 inférieure qui est portée par l'extrémité inférieure d'une vis 82 d'axe verticale. La vis 82 est vissée sous le couvercle 36 du support 26 fixe, parallèlement à la portion 28 de guidage du chariot 24. La coupelle 80 inférieure forme ainsi un point d'appui fixe du ressort 78.

Un bras 84 longitudinal s'étend depuis un tronçon 86 d'extrémité inférieur du chariot 24 de guidage qui est situé sous la portion 28 de guidage. Le bras 84 porte un manchon 88 qui est monté coulissant sur la vis 82. Le manchon 88 est destiné à loger le ressort 78. Une face d'extrémité supérieure du manchon 88 est agencée au-dessus de la coupelle 80.

Le ressort 78 est interposé verticalement entre la coupelle 80 inférieure et la face d'extrémité supérieure du manchon 88 pour exercer l'effort vertical de rappel élastique du chariot 24 vers sa position supérieure de moulage en prenant appui sur la coupelle 80.

Les premiers moyens d'actionnement comportent aussi un suiveur 90 de came qui est porté par le chariot 24. Le suiveur 90 de came est ici formé par un galet qui est monté rotatif autour d'un axe transversal sur le tronçon 86 d'extrémité inférieure du chariot 24.

Le suiveur 90 de came est destiné à coopérer avec un chemin 92 de came longitudinal, représenté en traits interrompus aux figures 2, 5, 7, 8 et 10. Le chemin 92 de came est formé par la face inférieure d'un rail qui est immobile par rapport au sol sur lequel repose le carrousel qui porte l'unité 10 de moulage. Ainsi, lorsque le carrousel tourne, le suiveur 90 de came entre en contact avec le chemin 92 de came pour faire coulisser le chariot 24 jusqu'à sa position inférieure d'extraction du récipient fini, à l'encontre de l'effort de rappel élastique du ressort 78, comme représenté à la figure 2.

Enfin, les premiers moyens d'actionnement comportent un dispositif d'armement qui est apte à exercer un effort d'armement sur le chariot 24 pour le déplacer depuis sa position supérieure de moulage jusqu'à sa position intermédiaire initiale de boxage à l'encontre de l'effort de rappel élastique sur une course d'armement orientée vers le bas.

Le dispositif d'armement est formé par au moins un vérin 94 qui est interposé entre le support 26 fixe et le chariot 24. Dans le mode de réalisation représenté aux figures, le vérin 94 est interposé verticalement entre une face inférieure du couvercle 36 et un deuxième bras 96 qui s'étend transversalement depuis le tronçon 86 d'extrémité inférieure du chariot 24.

Le vérin 94 comporte un corps dans lequel une tige d'actionnement est montée coulissante. Le corps du vérin 94 est plus lourd que la tige coulissante. Pour alléger le chariot 24, le corps du vérin 94 est donc fixé au couvercle 36, tandis que l'extrémité libre de la tige coulissante du vérin 94 est fixée au chariot 24. Cet agencement du vérin 94 permet aussi de simplifier l'alimentation en fluide pneumatique du vérin 94, car le corps du vérin 94 se trouve sur une partie fixe plutôt que sur le chariot.

Ces premiers moyens d'actionnement permettent ainsi de commander les déplacements du chariot 24 depuis sa position inférieure d'extraction jusqu'à sa position supérieure de moulage dans un premier temps, au moyen du ressort 78 et du chemin 92 de came, puis depuis sa position supérieure de moulage jusqu'à sa position intermédiaire initiale de boxage dans un deuxième temps, au moyen du vérin 94.

Les deuxièmes moyens d'actionnement permettant d'effectuer l'opération de boxage comportent au moins le cylindre 32 et un piston 98 qui est logé dans le cylindre 32. Le piston 98 divise le cylindre 32 en une chambre supérieure et une chambre 100 inférieure de travail.

Le piston 98 est monté coulissant verticalement dans le cylindre 32 entre une position inférieure dans laquelle le piston 98 repose sur le couvercle 36 inférieur et dans laquelle la chambre 100 de travail présente un volume minimal, comme illustré par exemple à la figure 2, et une position supérieure dans laquelle le piston 98 est situé à proximité de la paroi 34 supérieure de la cloche 30 et dans laquelle la chambre 100 de travail présente un volume maximal, comme illustré à la figure 9.

Un tube 102 central s'étend vers le haut depuis le centre du piston 98. Une face 104 d'extrémité supérieure du tube 102 est susceptible de venir solliciter une face 106 inférieure du chariot 24 dans la cheminée 40 lorsque le piston 98 est déplacé vers sa position supérieure. La face inférieure 106 est ici formée par une face inférieure du premier collet 56.

Lorsque la chambre 100 de travail du cylindre 32 est mise sous pression, le piston 98 est susceptible d'exercer un effort de boxage qui pousse le fond 16 de moule sur une course orientée de boxage depuis sa position intermédiaire initiale de boxage jusqu'à sa position supérieure de moulage. La course de boxage est inversée par rapport à la course d'armement.

La chambre 100 de travail est alimenté avec un fluide à haute pression, par exemple environ 40 bars, de manière que l'effort de boxage exercé par le piston 98 soit très supérieur à l'effort d'armement susceptible d'être exercé par le vérin 94 sur le chariot 24. Plus particulièrement, l'effort de boxage exercé par le piston 98 est supérieur à la somme de l'effort d'armement susceptible d'être exercé par le vérin 94, de l'effort de pression de soufflage exercée sur le fond de moule et, le cas échéant, de l'effort de la tige d'élongation. Ainsi, lorsque le piston 98 est actionné tandis que le vérin 94 est encore actif, le chariot 24 est déplacé jusqu'à sa position supérieure de moulage à l'encontre de l'effort d'armement du vérin 94.

Dans cette conception, le cylindre 32 est fixe par rapport au support 26 fixe. Ceci permet d'alléger considérablement le chariot 24 par rapport aux chariots de l'état de la technique. La cadence de production des récipients est ainsi susceptible d'être augmentée sans augmentation sensible de la consommation d'énergie par la machine de soufflage.

En outre, le piston 98 coulisse librement par rapport au chariot 24. En d'autres termes, le chariot 24 est susceptible de coulisser entre sa position inférieure d'extraction et sa position supérieure de moulage tandis que le piston 98 demeure fixe. Ceci permet d'alléger encore plus la masse du chariot 24.

On décrit à présent le fonctionnement de l'unité 10 de moulage lors de la mise en oeuvre d'un procédé de formage de récipient avec opération de boxage.

Le procédé débute juste après l'extraction du récipient final précédemment obtenu par ladite unité 10 de moulage. Comme représenté à la figure 2, le chariot 24 est alors commandé dans sa position inférieure d'extraction par contact entre le suiveur 90 de came et le chemin 92 de came. Le piston 98 et le vérin 94 sont au repos, ainsi le piston 98 occupe sa position inférieure, et la tige du vérin 94 est rétractée dans le corps du vérin 94.. Les demi-moules 14 occupent leur position écartée d'extraction, comme représenté à la figure 4.

Au cours d'une première étape "E1" de mise en place, comme représenté à la figure 5, le carrousel continue sa rotation, entraînant le suiveur 90 de came le long du chemin 92 de came. Le chariot 24 est alors rappelé élastiquement par le ressort 78 vers sa position supérieure de moulage. La première face 54 d'arrêt du chariot 24 entre en contact avec la face 52 de butée supérieure de la bague 48 de guidage pour arrêter le chariot 24 dans sa position supérieure de moulage. Durant ce déplacement du chariot 24 vers le haut, les demi-moules 14 demeurent en position écartée d'extraction, telle que représentée à la figure 4, pour permettre le passage de la deuxième face 72 d'arrêt au-dessus de la face 70 de butée supérieure des mors 60, quelle que soit la position intermédiaire initiale de boxage du chariot 24 par la suite. Comme représenté à la figure 6, après qu'une préforme ait été mise en place entre les demi-moules 14, les demi-moules 14 peuvent ensuite être fermés dans leur position jointe de moulage tandis que le chariot 24 occupe toujours sa position supérieure de moulage, comme illustré à la figure 7. Ceci permet de garantir que le collet 74 du fond 16 de moule soit emprisonné verticalement dans le lamage 76. Le carrousel poursuit sa rotation, et le suiveur 90 de came est décollé du chemin 92 de came.

En variante non représentée de l'invention, le vérin 94 commence à être actionné avant que les demi-moules 14 n'aient atteint leur position jointe de moulage. Le chariot 24 commence ainsi son déplacement vers sa position intermédiaire avant que les demi-moules 14 ne soient en position jointe de moulage. Ceci permet avantageusement de réduire le temps de mise en oeuvre du procédé.

L'opération de soufflage de la préforme est alors débutée.

Une deuxième étape "E2" d'armement est ensuite déclenchée avant ou pendant l'opération de soufflage. En tous les cas, la deuxième étape "E2" d'armement est réalisée avant que la préforme déformée n'atteigne le fond 16 de moule en position supérieure de moulage.

Comme représenté à la figure 8, au cours de cette deuxième étape "E2" d'armement, le chariot 24 est déplacé le long de sa course d'armement vers le bas par actionnement du vérin 94 à l'encontre de l'effort de rappel élastique du ressort 78. Le chariot 24 est alors immobilisé dans sa position intermédiaire initiale de boxage par contact de la deuxième face 72 d'arrêt contre la face 70 de butée inférieure des mors 60. Le fond 16 de moule est alors verticalement en retrait vers le bas par rapport aux empreintes 15 des demi-moules 14.

Lorsque la préforme est suffisamment déformée par soufflage pour épouser les empreintes 15 des demi-moules 14, une troisième étape "E3" de boxage est déclenchée. Comme représenté à la figure 9, durant cette troisième étape "E3" de boxage, le chariot 24 est poussé très rapidement le long de sa course de boxage par le piston 98 de manière à étirer la matière de la préforme en cours de formage pour former l'embase du récipient.

Pour ce faire, la chambre 100 de travail est mise sous pression de manière que le piston 98 pousse le fond 16 de moule vers le haut à l'encontre de la pression du fluide de soufflage remplissant la préforme, et à l'encontre du vérin 94. Le chariot 24 est arrêté dans sa position supérieure de moulage par contact de sa première face 54 d'arrêt avec la face 52 de butée supérieure de la bague 48 de butée.

La chambre 100 de travail est maintenue sous pression tant que la pression du fluide de soufflage est maintenue dans le récipient.

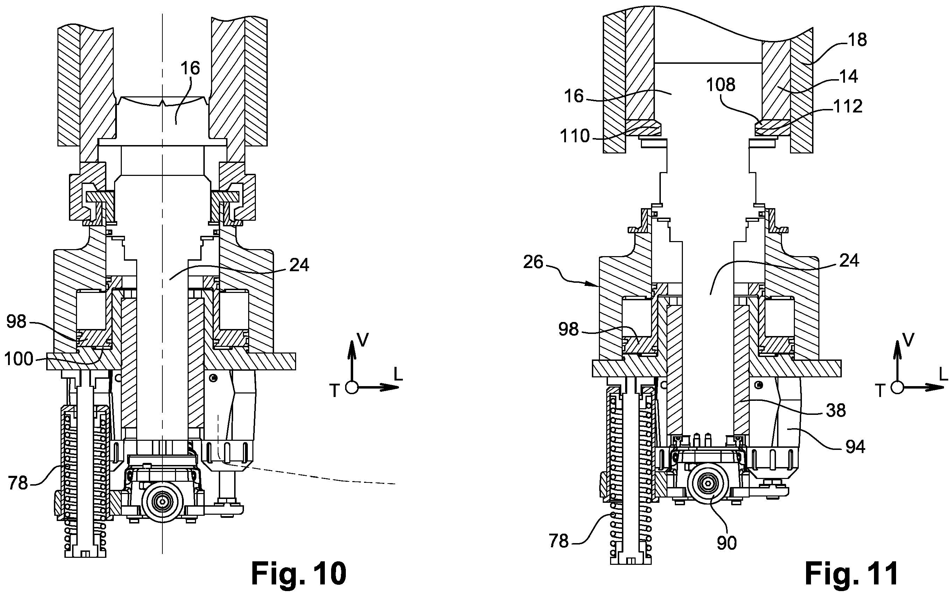

Comme représenté à la figure 10, lorsque le récipient final est enfin obtenu, le fluide de soufflage est évacué de la cavité du moule. La pression dans la chambre 100 de travail est alors abaissée de manière à faire retomber le piston 98 vers le bas. Le fond 16 de moule demeure maintenu dans sa position supérieure de moulage par l'effort de rappel élastique du ressort 78.

Enfin, lors d'une quatrième et dernière étape "E4" d'extraction du récipient fini, le chariot 24 est déplacé depuis sa position supérieure de moulage jusqu'à sa position inférieure d'extraction, comme représenté à la figure 2, après ouverture des deux demi-moules 14 dans leur position écartée, comme représenté à la figure 4. Le déplacement du chariot 24 est commandé par contact du suiveur 90 de came avec le chemin 92 de came.

Le procédé peut donc être réitéré pour un nouveau cycle de production d'un récipient.

L'unité 10 de moulage est ici conçue de manière à pouvoir être utilisée aussi pour produire des récipients sans opération de boxage.

Comme représenté à la figure 11, lorsqu'aucune opération de boxage n'est requise, la bague 48 de butée est démontée, et les mors 60 sont remplacés par des talons 108, aussi appelés rondelles d'usure, classiquement utilisés dans les unités de moulage connues.

En variante, la bague 48 de butée demeure fixée sur le support 26 fixe même lorsque le procédé de formage ne comporte pas d'opération de boxage. Ceci est notamment possible lorsque le chariot 24 n'a pas besoin d'être déplacé au-delà de la position supérieure de moulage définie par la bague 48 de butée pour que le fond 16 de moule complète l'empreinte portée par les demi-moules 14.

Selon encore une autre de l'invention, les mors 60 sont susceptibles de rester en place pendant le procédé de formage sans opération de boxage. C'est notamment le cas lorsque les mors 60 sont montés à demeure sur les porte-moules. En ce cas, les talons 108 sont montés directement sur les demi-moules 14, les mors 60 demeurant en place.

Lors d'un procédé de formage sans opération de boxage, le déplacement du chariot 24 est commandé uniquement par le suiveur 90 de came et par le chemin 92 de came, ainsi que par le ressort 78.

Ainsi, lors d'une première étape de mise en place, le chariot 24 est commandé jusqu'à sa position supérieure de moulage par contact entre le manchon 88 et le couvercle 36.

Les demi-moules 14 sont ensuite commandés dans leur position jointe de moulage en enserrant le fond 16 de moule, comme représenté à la figure 11. Les talons 108 définissent un tenon 110 qui est reçu dans une gorge 112 du fond 16 de moule de manière à immobiliser le fond 16 de moule verticalement dans les deux sens par rapport aux demi-moules 14.

Puis l'opération de soufflage prend place de manière connue. Lorsque le récipient final est obtenu, les demi-moules 14 sont commandés dans leur position écartée d'extraction, puis le chariot 24 est commandé vers sa position inférieure d'extraction par contact entre le suiveur 90 de came et le chemin 92 de came. Le récipient fini est alors éjecté. Le procédé peut être réitéré pour un nouveau cycle de production d'un récipient suivant.

L'unité 10 de moulage réalisé selon les enseignements de l'invention permet ainsi de réaliser des récipients avec ou sans opération de boxage.

La mise en condition de l'unité 10 de moulage pour passer de l'un à l'autre des procédés de formage est très simple. Cette mise en condition est généralement réalisée lors d'un arrêt de la machine pour permettre de changer les demi-moules 14.

Durant cet arrêt, seule la bague 48 de butée doit être ajoutée ou retirée pendant l'arrêt de la machine de soufflage pour permettre le changement de moule. Les mors ou les talons peuvent être fixés aux demi-moules 14 avant l'arrêt de la machine de soufflage. Ainsi, les demi-moules 14 préalablement équipés des mors ou des talons adaptés sont montés dans la machine. De plus, une telle unité 10 de moulage présente un chariot très léger, car les deuxièmes moyens d'actionnement sont portés par le support fixe et non par le chariot, comme c'est le cas dans l'état de la technique. L'inertie du chariot 24 est, de ce fait, très faible. Ceci permet de mettre en mouvement le chariot 24 très rapidement avec un apport d'énergie similaire à celui nécessaire pour former un récipient sans opération de boxage. Il est ainsi possible de produire des récipients avec une opération de boxage avec une cadence analogue à la cadence de production de récipients produits sans opération de boxage.

## Revendications

1. Unité (10) de moulage pour le formage d'un récipient en matériau thermoplastique par soufflage, notamment par étirage-soufflage, d'une préforme, l'unité (10) de moulage comportant :
- deux demi-moules (14) qui sont mobiles transversalement par rapport à un support (26) fixe entre une position jointe de moulage et une position écartée d'extraction du récipient fini ;
- un fond (16) de moule qui est mobile verticalement entre une position inférieure d'extraction du récipient fini et une position supérieure de moulage d'une embase du récipient, le fond (16) de moule étant susceptible d'être déplacé entre les deux demi-moules (14) en position jointe de moulage sur une course orientée, dite de boxage, s'étendant depuis une position intermédiaire initiale de boxage jusqu'à sa position supérieure de moulage ;
- un chariot (24) qui porte le fond (16) de moule et qui est monté mobile dans le support (26) fixe ;
- des premiers moyens d'actionnement pour déplacer le chariot (24) par rapport à son support (26) fixe entre une position inférieure du fond (16) de moule et sa position intermédiaire initiale de boxage ;
- des deuxièmes moyens d'actionnement comportant au moins un cylindre (32) logeant un piston (98) coulissant verticalement susceptible de pousser le fond (16) de moule sur sa course de boxage par mise sous pression d'une chambre (100) inférieur de travail du cylindre (32) ;
**caractérisée en ce que** le fond (16) de moule est porté de manière fixe par le chariot (24), le cylindre (32) étant fixe par rapport au support (26) fixe.

2. Unité (10) de moulage selon la revendication précédente, **caractérisée en ce que** le support (26) fixe comporte une face (52) de butée supérieure qui limite le déplacement du chariot (24) vers le haut dans la position supérieure du fond (161) de moule.

3. Unité (10) de moulage selon la revendication précédente, **caractérisée en ce que** la face (52) de butée supérieure est portée par un premier élément (48) amovible qui est fixé de manière démontable sur le support (26) fixe.

4. Unité (10) de moulage selon l'une quelconque des revendications précédentes, **caractérisée en ce qu'**au moins l'un des demi-moules (14) comporte une face (70) de butée inférieure qui limite le déplacement du chariot (24) vers le bas dans sa position intermédiaire initiale de boxage lorsque les demi-moules (14) occupent leur position jointe de moulage.

5. Unité (10) de moulage selon la revendication précédente, **caractérisée en ce que** la face (70) de butée inférieure est portée par un deuxième élément (60) amovible qui est fixé de manière démontable sous le demi-moule (14) associé.

6. Unité (10) de moulage selon l'une quelconque des revendications 4 ou 5, **caractérisée en ce que** le fond (16) de moule comporte une face (72) d'arrêt qui est destinée à venir en contact avec la face (70) de butée inférieure.

7. Unité (10) de moulage selon l'une quelconque des revendications précédentes, **caractérisée en ce que** les premiers moyens d'actionnement comporte des moyens (78) de rappel élastique qui exercent un effort de rappel élastique du chariot (24) vers sa position supérieure de moulage.

8. Unité (10) de moulage selon la revendication précédente, **caractérisée en ce que** les premiers moyens d'actionnement comportent un suiveur (90) de came qui est porté par le chariot (24) et un chemin (92) de came qui coopère avec le suiveur (90) de came pour faire coulisser le chariot (24) jusqu'à sa position inférieure à l'encontre de l'effort de rappel élastique.

9. Unité (10) de moulage selon l'une quelconque des revendications 7 ou 8, **caractérisée en ce que** les premiers moyens d'actionnement comportent un dispositif d'armement susceptible d'exercer un effort d'armement sur le chariot (24) pour le déplacer depuis sa position supérieur jusqu'à sa position intermédiaire initiale de boxage à l'encontre de l'effort de rappel élastique sur une course orientée d'armement inversée par rapport à la course de boxage.

10. Unité (10) de moulage selon la revendication précédente, **caractérisée en ce que** les premiers moyens d'actionnement comportent un vérin (94) qui est porté par le support (26) fixe.

11. Unité (10) de moulage selon la revendication précédente, **caractérisée en ce que** l'effort d'armement susceptible d'être exercé par le vérin (94) est très inférieur à l'effort de boxage susceptible d'être exercé par le piston (98) sur le chariot (24).

12. Unité (10) selon l'une quelconque des revendications précédentes, **caractérisée en ce que** le piston (98) coulisse librement par rapport au chariot (24), le chariot (24) étant susceptible de coulisser entre sa position inférieure et sa position supérieure tandis que le piston (98) demeure fixe.

13. Procédé de formage d'un récipient par soufflage d'une préforme mettant en oeuvre l'unité (10) de moulage réalisée selon l'une quelconque des revendications précédentes, **caractérisé en ce qu'**il comporte chronologiquement :
- une première étape (E1) mise en place, le fond (16) de moule occupant initialement sa position inférieure et les demi-moules (14) occupant initialement leur position écartée, au cours de laquelle le fond (16) de moule est déplacé jusqu'à sa position supérieure, puis au cours de laquelle les deux demi-moules (14) sont déplacés jusqu'à leur position jointe de moulage ;
- puis une deuxième étape (E2) d'armement au cours de laquelle le chariot (24) est déplacé le long de sa course d'armement jusqu'à sa position intermédiaire initiale de boxage ;
- puis une troisième étape (E3) de boxage qui intervient pendant le formage d'une préforme insérée dans le moule après la première étape (E1), et durant laquelle le chariot (24) est déplacé le long de sa course de boxage au moyen du piston (98) de manière à étirer la matière de la préforme en cours de formage pour former l'embase du récipient ;
- puis une quatrième étape (E4) d'extraction du récipient fini au cours de laquelle le chariot (24) est déplacé depuis sa position supérieure jusqu'à sa position inférieure après ouverture des deux demi-moules (14) dans leur position écartée.

## Patentansprüche

1. Formeinheit (10) zum Formen eines Behälters aus thermoplastischem Material durch Blasen, insbesondere durch Streckblasen, einer Preform, wobei die Formeinheit (10) aufweist:
- zwei Formhälften (14), welche quer bezüglich eines festen Trägers (26) zwischen einer zusammengefügten Position des Formens und einer voneinander beabstandeten Position der Entnahme des fertigen Behälters beweglich sind;
- einen Formboden (16), welcher vertikal zwischen einer unteren Position der Entnahme des fertigen Behälters und einer oberen Position des Formens eines Unterteils des Behälters beweglich ist, wobei der Formboden (16) zwischen den zwei Formhälften (14) in der zusammengefügten Position des Formens auf einem gerichteten Weg, Treibweg (Boxing-Weg) genannt, verschiebbar ist, der sich von einer Treibanfangs-Zwischenposition bis zu seiner oberen Position des Formens erstreckt;
- einen Schlitten (24), welcher den Formboden (16) trägt und welcher beweglich auf dem festen Träger (26) angebracht ist;
- erste Betätigungsmittel zum Verschieben des Schlittens (24) bezüglich seines festen Trägers (26) zwischen einer unteren Position des Formbodens (16) und seiner Treibanfangs-Zwischenposition;
- zweite Betätigungsmittel, die wenigstens einen Zylinder (32) aufweisen, der einen vertikal gleitenden Kolben (98) aufnimmt, der dazu eingerichtet ist, den Formboden (16) durch Druckbeaufschlagung einer unteren Arbeitskammer (100) des Zylinders (32) auf seinem Treibweg zu schieben;
**dadurch gekennzeichnet, dass** der Formboden (16) starr von dem Schlitten (24) getragen wird, wobei der Zylinder (32) bezüglich des festen Trägers (26) fest ist.

2. Formeinheit (10) nach dem vorhergehenden Anspruch, **dadurch gekennzeichnet, dass** der feste Träger (26) eine obere Anschlagseite (52) aufweist, welche die Verschiebung des Schlittens (24) nach oben in der oberen Position des Formbodens (16) begrenzt.

3. Formeinheit (10) nach dem vorhergehenden Anspruch, **dadurch gekennzeichnet, dass** die obere Anschlagseite (52) von einem ersten lösbaren Element (48) getragen wird, welches auf demontierbare Weise auf dem festen Träger (26) befestigt ist.

4. Formeinheit (10) nach einem der vorhergehenden Ansprüche, **dadurch gekennzeichnet, dass** wenigstens eine der Formhälften (14) eine untere Anschlagseite (70) aufweist, welche die Verschiebung des Schlittens (24) nach unten in seiner Treibanfangs-Zwischenposition begrenzt, wenn die Formhälften (14) ihre zusammengefügte Position des Formens einnehmen.

5. Formeinheit (10) nach dem vorhergehenden Anspruch, **dadurch gekennzeichnet, dass** die untere Anschlagseite (70) von einem zweiten lösbaren Element (60) getragen wird, welches auf demontierbare Weise unter der zugeordneten Formhälfte (14) befestigt ist.

6. Formeinheit (10) nach einem der Ansprüche 4 oder 5, **dadurch gekennzeichnet, dass** der Formboden (16) eine Stoppseite (72) aufweist, welche dazu bestimmt ist, mit der unteren Anschlagseite (70) in Kontakt zu kommen.

7. Formeinheit (10) nach einem der vorhergehenden Ansprüche, **dadurch gekennzeichnet, dass** die ersten Betätigungsmittel Mittel (78) zur elastischen Rückholung aufweisen, welche eine Kraft zur elastischen Rückholung des Schlittens (24) in Richtung seiner oberen Position des Formens ausüben.

8. Formeinheit (10) nach dem vorhergehenden Anspruch, **dadurch gekennzeichnet, dass** die ersten Betätigungsmittel einen Nockenstößel (90) aufweisen, welcher von dem Schlitten (24) getragen wird, und eine Nockenbahn (92), welche mit dem Nockenstößel (90) zusammenwirkt, um ein Gleiten des Schlittens (24) entgegen der elastischen Rückholkraft bis in seine untere Position zu bewirken.

9. Formeinheit (10) nach einem der Ansprüche 7 oder 8, **dadurch gekennzeichnet, dass** die ersten Betätigungsmittel eine Spannvorrichtung aufweisen, die dazu eingerichtet ist, eine Spannkraft auf den Schlitten (24) auszuüben, um ihn entgegen der elastischen Rückholkraft auf einem gerichteten Spannweg, der umgekehrt zu dem Treibweg verläuft, aus seiner oberen Position bis in seine Treibanfangs-Zwischenposition zu verschieben.

10. Formeinheit (10) nach dem vorhergehenden Anspruch, **dadurch gekennzeichnet, dass** die ersten Betätigungsmittel einen Hubzylinder (94) aufweisen, welcher von dem festen Träger (26) getragen wird.

11. Formeinheit (10) nach dem vorhergehenden Anspruch, **dadurch gekennzeichnet, dass** Spannkraft, die von dem Hubzylinder (94) ausgeübt werden kann, wesentlich kleiner als die Treibkraft ist, die von dem Kolben (98) auf den Schlitten (24) ausgeübt werden kann.

12. Einheit (10) nach einem der vorhergehenden Ansprüche, **dadurch gekennzeichnet, dass** der Kolben (98) in Bezug auf den Schlitten (24) frei gleitet, wobei der Schlitten (24) dazu eingerichtet ist, zwischen seiner unteren Position und seiner oberen Position zu gleiten, während der Kolben (98) fest bleibt.

13. Verfahren zum Formen eines Behälters durch Blasen einer Preform unter Einsatz der nach einem der vorhergehenden Ansprüche hergestellten Formeinheit (10), **dadurch gekennzeichnet, dass** es der Reihe nach umfasst:
- einen ersten Schritt (E1) des Instellungbringens, wobei der Formboden (16) anfänglich seine untere Position einnimmt und die Formhälften (14) anfänglich ihre voneinander beabstandete Position einnehmen, in welchem der Formboden (16) bis in seine obere Position verschoben wird und in welchem anschließend die zwei Formhälften (14) bis in ihre zusammengefügte Position des Formens verschoben werden;
- danach einen zweiten Schritt (E2) des Spannens, in welchem der Schlitten (24) entlang seines Spannweges bis in seine Treibanfangs-Zwischenposition verschoben wird;
- danach einen dritten Schritt (E3) des Treibens (Boxing), welcher während des Formens einer Preform erfolgt, die nach dem ersten Schritt (E1) in das Formwerkzeug eingesetzt wurde, und in welchem der Schlitten (24) mittels des Kolbens (98) entlang seines Treibweges verschoben wird, derart, dass das Material der Preform, die gerade geformt wird, gestreckt wird, um den Unterteil des Behälters zu formen;
- danach einen vierten Schritt (E4) der Entnahme des fertigen Behälters, in welchem der Schlitten (24) nach dem Öffnen der zwei Formhälften (14) in ihre voneinander beabstandete Position aus seiner oberen Position bis in seine untere Position verschoben wird.

## Claims

1. Moulding unit (10) for forming a thermoplastic container by blow-moulding, notably by stretch-blow-moulding, of a preform, the moulding unit (10) comprising:
- two half-moulds (14) which are transversely mobile relative to a fixed support (26) between a closed-together position for moulding and a separated position for extracting the finished container;
- a mould bottom (16) which is vertically mobile between a lowered position for extracting the finished container and a raised position for moulding a base of the container, the mould bottom (16) being able to be moved between the two half-moulds (14) in the closed-together moulding position over an oriented travel, referred to as boxing travel, extending from an initial intermediate boxing position as far as its raised moulding position;
- a carriage (24) which carries the mould bottom (16) and which is mounted with the ability to move in the fixed support (26);
- first actuating means for moving the carriage (24) relative to its fixed support (26) between a lowered position of the mould bottom (16) and its intermediate initial boxing position;
- second actuating means comprising at least one cylinder (32) housing a piston (98) sliding vertically and capable of pushing the mould bottom (16) over its boxing travel through the pressurising of a lower working chamber (100) of the cylinder (32);
**characterized in that** the mould bottom (16) is carried fixedly by the carriage (24), the cylinder (32) being fixed with respect to the fixed support (26).

2. Moulding unit (10) according to the preceding claim, **characterized in that** the fixed support (26) comprises an upper abutment face (52) which limits the upwards movement of the carriage (24) in the upper position of the mould bottom (16).

3. Moulding unit (10) according to the preceding claim, **characterized in that** the upper abutment face (52) is carried by a first removable element (48) which is fixed removably to the fixed support (26).

4. Moulding unit (10) according to any one of the preceding claims, **characterized in that** at least one of the half-moulds (14) comprises a lower abutment face (70) which limits the downwards movement of the carriage (24) into its initial intermediate boxing position when the half-moulds (14) are occupying their closed-together moulding position.

5. Moulding unit (10) according to the preceding claim, **characterized in that** the lower abutment face (70) is carried by a second removable element (60) which is fixed removably under the associated half-mould (14).

6. Moulding unit (10) according to either one of Claims 4 and 5, **characterized in that** the mould bottom (16) comprises a stop face (72) which is intended to come into contact with the lowest abutment face (70).

7. Moulding unit (10) according to any one of the preceding claims, **characterized in that** the first actuating means comprise elastic return means (78) which apply an elastic return force to the carriage (24) returning it towards its upper moulding position.

8. Moulding unit (10) according to the preceding claim, **characterized in that** the first actuating means comprise a cam follower (90) which is carried by the carriage (24) and a camway (92) which collaborates with the cam follower (90) to cause the carriage (24) to slide into its lower position against the elastic return force.

9. Moulding unit (10) according to any one of Claims 7 and 8, **characterized in that** the first actuating means comprise an arming device capable of applying an arming force to the carriage (24) to move it from its upper position into its initial intermediate boxing position against the elastic return force over an oriented arming travel that is the opposite of the boxing travel.

10. Moulding unit (10) according to the preceding claim, **characterized in that** the first actuating means comprise an actuating cylinder (94) which is carried by the fixed support (26).

11. Moulding unit (10) according to the preceding claim, **characterized in that** the arming force capable of being exerted by the actuating cylinder (94) is very much lower than the boxing force capable of being exerted by the piston (98) on the carriage (24).

12. Unit (10) according to any one of the preceding claims, **characterized in that** the piston (98) slides freely with respect to the carriage (24), the carriage (24) being capable of sliding between its lower position and its upper position while the piston (98) remains fixed.

13. Method for forming a container by blow moulding a preform using the moulding unit (10) produced according to any one of the preceding claims, **characterized in that** it involves, chronologically:
- a placement first step (E1), the mould bottom (16) initially occupying its lowered position and the half-moulds (14) initially occupying their parted position, during which step the mould bottom (16) is moved into its upper position, then during which the two half-moulds (14) are moved into their closed-together moulding position;
- then an arming second step (E2) during which the carriage (24) is moved along its arming travel as far as its initial intermediate boxing position;
- then a boxing third step (E3) which occurs during the forming of a preform inserted into the mould after the first step (E1), and during which the carriage (24) is moved along its boxing travel by means of the piston (98) so as to stretch the material of the preform that is in the process of being formed in order to form the base of the container;
- then a fourth step (E4) of extracting the finished container and during which the carriage (24) is moved from its upper position to its lower position after opening the two half-moulds (14) into their parted position.
